# EUROPÄISCHE PATENTSCHRIFT

(11) **EP 3 674 672 B1**
(45) Veröffentlichungstag und Bekanntmachung des Hinweises auf die Patenterteilung: **06.07.2022**
(21) Anmeldenummer: 19219259.9
(22) Anmeldetag: 23.12.2019
(51) Int. Cl.: G01F 1/115

(54) **DURCHFLUSSMESSVORRICHTUNG**
FLOW METER
DISPOSITIF DE MESURE D'ÉCOULEMENT

(30) Priorität: 28.12.2018 DE 102018010005
(43) Veröffentlichungstag der Anmeldung: 01.07.2020
(73) Patentinhaber: Marquardt GmbH, 78604 Rietheim-Weilheim (DE)
(72) Erfinder: MESSNER, Udo, 78604 Rietheim-Weilheim (DE); ZIMMER, Andreas, 78655 Dunningen (DE); FAHRLÄNDER, Klaus, 78554 Aldingen (DE)
(74) Vertreter: Jostarndt Patentanwalts-AG

(56) Entgegenhaltungen:
- CH-A- 308 922
- KR-A- 20060 087 677
- US-A- 4 275 291

## Beschreibung

Die Erfindung geht aus von einer Vorrichtung zur Durchflussmessung nach dem Oberbegriff des Patentanspruchs 1.

Vorrichtungen zur Durchflussmessung für ein Fluid werden unter anderen im Bereich der Heizungstechnik eingesetzt.

Eine solche Vorrichtung zur Durchflussmessung für ein Fluid, die in der Art eines Turbinensensors ausgebildet ist, weist ein Gehäuse auf, wobei am Gehäuse ein erster Anschluss für die Zuführung des Fluids und ein zweiter Anschluss für die Abführung des Fluids angeordnet sind. Im Gehäuse befindet sich ein Rotor, der von dem durchfließenden Fluid in eine Drehbewegung versetzbar ist. Am Rotor ist ein Magnet zur Zusammenwirkung mit einem Sensor, und zwar insbesondere einem Hallsensor, angeordnet, derart dass der Sensor bei Drehung des Rotors ein zur Drehung des Rotors korrespondierendes Signal erzeugt. Dieses Signal korreliert wiederum mit der Durchflussgeschwindigkeit und/oder der Durchflussmenge des Fluids. Es hat sich gezeigt, dass bei solchen Vorrichtungen Unwuchten beim Rundlauf des Rotors auftreten können, welche wiederum die Lebensdauer der Vorrichtung beeinträchtigen. Die Dokumente US 4.275.291 A und EP 1.248.080 A1 offenbaren Beispiele für Turbinendurchflussmesser aus dem Stand der Technik.

Der Erfindung liegt die Aufgabe zugrunde, die Vorrichtung zur Durchflussmessung derart weiterzuentwickeln, dass die Lebensdauer und/oder die Funktionssicherheit gesteigert ist. Diese Aufgabe wird bei einer gattungsgemäßen Vorrichtung zur Durchflussmessung durch die kennzeichnenden Merkmale des Anspruchs 1 gelöst.

Bei der erfindungsgemäßen Vorrichtung zur Durchflussmessung ist der Magnet als ein Ringmagnet ausgebildet. Der Magnet ist in einer Aufnahme am Rotor derart angeordnet, dass der Magnet an dessen Außenumfang in der Aufnahme zentriert ist. Der Magnet weist fertigungsbedingt am Außendurchmesser eine hohe Maßgenauigkeit auf. Aufgrund der Ausbildung des Magneten als Ringmagnet sowie der Führung und/oder Zentrierung des Magneten an dessen Außendurchmesser im Rotor werden Unwuchten vermieden und es wird der Rundlauf des Rotors verbessert.

Bei der erfindungsgemäßen Vorrichtung zur Durchflussmessung ist der Rotor mittels einer Welle drehbar gelagert.

Der Rotor umfasst in einfacher sowie kompakter Art eine an der Welle angeordnete Hülse sowie einen, die Hülse mit einem Abstand umgebenden ringförmigen Körper.

Bei der erfindungsgemäßen Vorrichtung zur Durchflussmessung ist der einen kreisförmigen Querschnitt aufweisende ringförmige Körper konzentrisch beabstandet zu der Hülse. Weiter ist die Aufnahme am ringförmigen Körper mittels eines, zum Außenumfang des Magneten korrespondierenden Randes gebildet, so dass der ebenfalls einen kreisförmigen Querschnitt besitzende Ringmagnet präzise in der Aufnahme zentriert ist.

Zwecks einfacher sowie kostengünstiger Befestigung des ringförmigen Körpers an der Hülse ist der ringförmige Körper mittels wenigstens einer Speiche mit der Hülse verbunden. Bei der erfindungsgemäßen Vorrichtung zur Durchflussmessung ist dadurch ein Durchbruch zwischen der Hülse und dem ringförmigen Körper für das Fluid gebildet, so dass das Fluid die Vorrichtung zur Durchflussmessung weitgehend ungestört und mit geringem Druckabfall durchfließen kann. Dies trägt zur präzisen Messung des Durchflusses für das Fluid bei, so dass Messfehler weitgehend ausgeschlossen sind.

Zwecks sicherer Fixierung sowie einfacher Montage des Magneten in der Aufnahme kann ein Rasthaken an der Speiche zur Befestigung des Magneten in der Aufnahme vorgesehen sein. In einfacher Art und Weise kann der Rasthaken am Innendurchmesser des Magneten angeordnet sein.

In weiterer Ausgestaltung kann der Innendurchmesser des Magneten als ein Polygon ausgebildet sein. Der am Rotor befindliche Rasthaken kann in eine Ecke des Polygons am Magneten zu dessen Verrastung am Rotor eingreifen. Beispielsweise kann der polygonförmige Innendurchmesser des Magneten als ein regelmäßiges Achteck beziehungsweise als ein Achtkant ausgebildet sein. Des Weiteren können beispielsweise vier Speichen, und zwar insbesondere in etwa kreuzförmig, von der Hülse abgehen. Dann kann der Magnet an jeder zweiten Ecke des polygonförmigen Innendurchmessers mittels eines an der Speiche befindlichen Rasthakens befestigt werden. Aufgrund dieser Ausgestaltung der Innengeometrie des Magneten und den damit zusammenwirkenden Rasthaken kann ein Rotieren des Magneten relativ zum Rotor in sicherer Art verhindert werden. Zudem wird durch die Achtkant-Form des Magneten die durchströmte Fläche im Innern des Magneten vergrößert, um einen geringen Druckabfall für das durchfließende Fluid zu erreichen. Auch diese Ausgestaltung der Vorrichtung zur Durchflussmessung trägt zur Vermeidung von Messfehlern bei.

Zweckmäßigerweise kann ein Flügelrad an der Welle angeordnet sein, derart dass der Rotor von dem das Flügelrad durchströmenden Fluid in Drehbewegung versetzbar ist. Des Weiteren kann der Rotor in einer Kammer im Gehäuse drehbar gelagert sein. In kompakter Art kann der Sensor in und/oder an einer Wandung der Kammer angeordnet sein.

Für eine besonders bevorzugte Ausgestaltung der Erfindung ist nachfolgendes festzustellen.

Der Turbinensensor soll einen präzisen Rundlauf sowie einen geringen Druckabfall aufweisen. Der Turbinensensor verfügt über einen, entsprechend dem vorherrschenden Durchfluss rotierenden, Rotor bzw. Impeller. Auf dem Impeller ist ein Ringmagnet befestigt, über welchen die einzelnen Rotationen erfasst werden können. Die Kombination aus Impeller und Ringmagnet muss die Anforderungen an Rundlauf und Druckabfall ebenso erfüllen. Zudem muss verhindert werden, dass sich der Magnet um seine Rotationsachse relativ zum Impeller verdrehen kann.

Beim erfindungsgemäßen Impeller- und/oder Magnetkonzept für den Turbinensensor weist der Magnet fertigungsbedingt am Außendurchmesser eine hohe Maßgenauigkeit auf. Daher erfolgt die Führung und/oder Zentrierung des Magneten im Impeller am Außendurchmesser. Der Innendurchmesser des Magneten ist als ein Achtkant ausgeführt. Bei der Montage von Magnet und Impeller greifen vier am Impeller befindliche Rasthaken in die Ecken des Achtkants ein und verrasten den Magneten. Durch die Kombination der Innengeometrie des Magneten und den Rasthaken kann ein Rotieren des Magneten relativ zum Impeller verhindert werden. Zudem wird durch die Achtkant-Form die durchströmte Fläche im Innern des Magneten vergrößert, um einen geringen Druckabfall zu erreichen.

Die mit der Erfindung erzielten Vorteile bestehen insbesondere in Folgendem:
- Es ist ein geringer Druckabfall des Impellers mitsamt dem Magneten bei gleichzeitig guten Rundlaufeigenschaften gewährleistet.
- Es erfolgt eine Fixierung des Magneten in radialer Richtung, so dass eine Sicherung gegenüber Verdrehen gegeben ist.
- Es erfolgt eine Fixierung des Magneten in axialer Richtung.

Ein Ausführungsbeispiel der Erfindung mit verschiedenen Weiterbildungen und Ausgestaltungen ist in den Zeichnungen dargestellt und wird im folgenden näher beschrieben. Es zeigen
Fig. 1 eine Vorrichtung zur Durchflussmessung mit einem Rotor in schematischer Ansicht,
Fig. 2 den Rotor als Einzelteil,
Fig. 3 einen Schnitt durch den Rotor aus Fig. 2 und
Fig. 4 einen Schnitt wie in Fig. 3 durch den Rotor gemäß einer anderen Ausgestaltung.

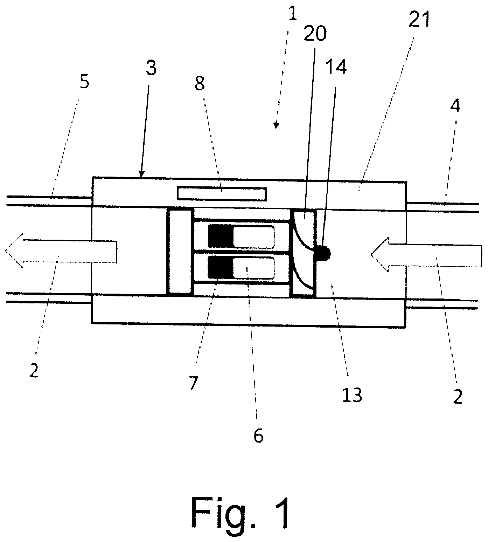

In Fig. 1 ist eine Vorrichtung zur Durchflussmessung 1 in der Art eines Turbinensensors für ein Fluid 2 in schematischer Ansicht näher zu sehen. Der Turbinensensor 1 weist ein Gehäuse 3 auf. Am Gehäuse 3 sind ein erster Anschluss 4 für die Zuführung des Fluids 2 sowie ein zweiter Anschluss 5 für die Abführung des Fluids 2 angeordnet. Im Gehäuse 3 befindet sich ein Rotor 6 bzw. Impeller in der Art eines Flügelrades, der von dem durchfließenden Fluid 2 in eine Drehbewegung versetzbar ist. Am Rotor 6 ist ein Magnet 7 zur Zusammenwirkung mit einem Sensor 8, bei dem es sich insbesondere um einen Hallsensor handelt, angeordnet. Der Sensor 8 erzeugt bei Drehung des Rotors 6 ein zur Drehung des Rotors 6, und zwar genauer ein zur Winkelgeschwindigkeit des Rotors 6, korrespondierendes Signal. Dieses Signal korreliert dann wiederum mit der Durchflussgeschwindigkeit und/oder der Durchflussmenge des Fluids 2.

Der Rotor 6 ist mittels einer Welle 14 in einer Kammer 13 im Gehäuse 3 drehbar gelagert. Ein Flügelrad 20 ist an der Welle 14 angeordnet, derart dass der Rotor 6 von dem das Flügelrad 20 durchströmenden Fluid 2 in Drehbewegung versetzbar ist. Der Sensor 8 ist in und/oder an einer Wandung 21 der Kammer 13 angeordnet.

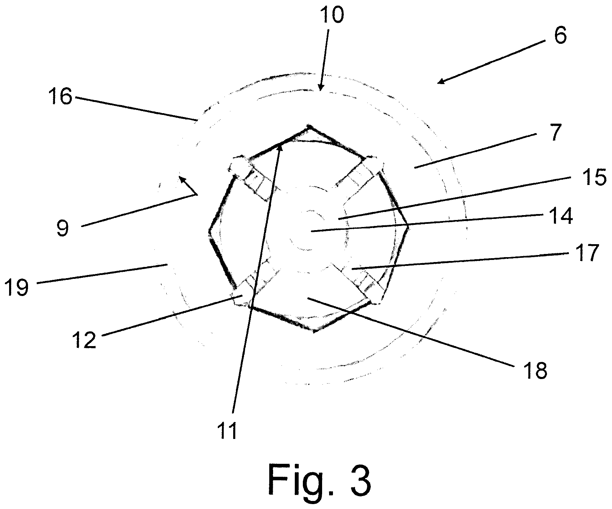

Wie näher aus Fig. 3 hervorgeht, ist der Magnet 7 als ein Ringmagnet ausgebildet, der einen kreisförmigen Außenumfang 10 besitzt. Der Magnet 7 ist in einer Aufnahme 9 am Rotor 6 derart angeordnet, dass der Magnet 7 an dessen Außenumfang 10 in der Aufnahme 9 zentriert ist. Weiter umfasst der Rotor 6 eine an der Welle 14 angeordnete Hülse 15 sowie einen ringförmigen Körper 16, der die Hülse 15 mit einem Abstand umgibt. Und zwar ist der ringförmige Körper 16 konzentrisch zur Hülse 15 beabstandet. Des Weiteren ist der ringförmige Körper 16 mittels wenigstens einer Speiche 17 mit der Hülse 15 verbunden, so dass ein Durchbruch 18 zwischen der Hülse 15 und dem ringförmigen Körper 16 für das Fluid 2 gebildet ist.

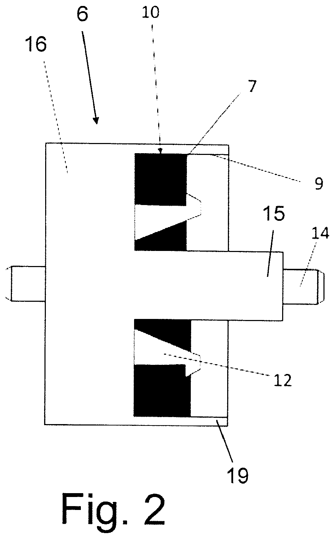

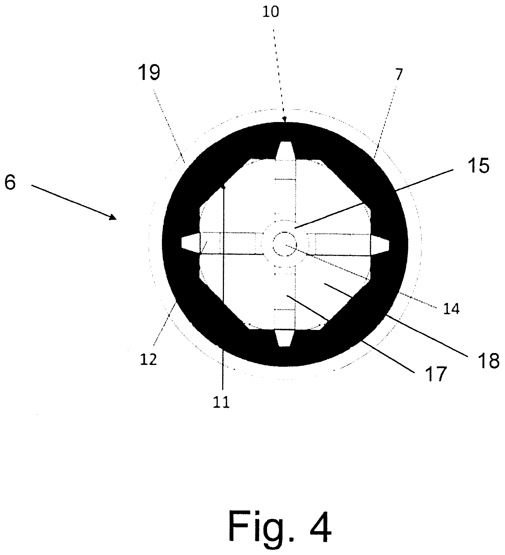

Die Aufnahme 9 ist am ringförmigen Körper 16 mittels eines, zum Außenumfang 10 des Magneten 7 korrespondierenden Randes 19 gebildet. An der Speiche 17 ist ein Rasthaken 12 zur Befestigung des Magneten 7 in der Aufnahme 9 vorgesehen, wie anhand von Fig. 2 zu erkennen ist. Dabei ist der Rasthaken 12 am Innendurchmesser 11 des Magneten 7 angeordnet, wie weiter anhand von Fig. 3 oder Fig. 4 zu sehen ist. In bevorzugter Weise ist der Innendurchmesser 11 des Magneten 7 als ein Polygon ausgebildet. Der Rasthaken 12 kann gemäß Fig. 4 an einer Seite des Polygons verrastend auf den Magneten 7 einwirken. In einer anderen, bevorzugten Ausgestaltung greift der Rasthaken 12 gemäß Fig. 3 in eine Ecke des Polygons 11 am Magneten 7 zu dessen verdrehsicheren Verrastung am Rotor 6 ein.

Vorliegend ist der polygonförmige Innendurchmesser 11 des Magneten 7 als ein regelmäßiges Achteck bzw. als ein Achtkant ausgebildet, wie in Fig. 3 zu sehen ist. Des Weiteren gehen vier Speichen 17, und zwar in etwa kreuzförmig, von der Hülse 16 ab. Dabei ist der Magnet 7 dann an jeder zweiten Ecke des polygonförmigen Innendurchmessers 11 mittels eines an der Speiche 17 befindlichen Rasthakens 12 befestigt.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann der erfindungsgemäße Turbinensensor nicht nur in der Heizungstechnik sondern auch bei Hausgeräten, wie Waschmaschinen, Geschirrspülmaschinen o. dgl., oder sonstigen Geräten der Weißen Ware Verwendung finden.

### Bezugszeichen-Liste:

- 1:: Vorrichtung zur Durchflussmessung / Turbinensensor
- 2:: Fluid
- 3:: Gehäuse
- 4:: (erster) Anschluss
- 5:: (zweiter) Anschluss
- 6:: Rotor
- 7:: Magnet
- 8:: Sensor
- 9:: Aufnahme (in Rotor)
- 10:: Außenumfang (von Magnet)
- 11:: Innendurchmesser (von Magnet) / Polygon
- 12:: Rasthaken
- 13:: Kammer (im Gehäuse)
- 14:: Welle (an Rotor)
- 15:: Hülse
- 16:: (ringförmiger) Körper
- 17:: Speiche
- 18:: Durchbruch
- 19:: Rand (von Aufnahme)
- 20:: Flügelrad
- 21:: Wandung (von Gehäuse)

## Patentansprüche

1. Vorrichtung zur Durchflussmessung in der Art eines Turbinensensors für ein Fluid (2), mit einem Gehäuse (3), mit einem ersten Anschluss (4) am Gehäuse (3) für die Zuführung des Fluids (2), mit einem zweiten Anschluss (5) am Gehäuse (3) für die Abführung des Fluids (2), mit einem im Gehäuse (3) befindlichen Rotor (6), der von dem durchfließenden Fluid (2) in eine Drehbewegung versetzbar ist, wobei der Rotor (6) mittels einer Welle (14) drehbar gelagert ist und eine an der Welle (14) angeordnete Hülse (15) sowie einen die Hülse (15) konzentrisch beabstandet umgebenden ringförmigen Körper (16) umfasst, mit einem am Rotor (6) angeordneten Magneten (7) zur Zusammenwirkung mit einem Sensor (8), insbesondere einem Hallsensor, derart dass der Sensor (8) bei Drehung des Rotors (6) ein zur Drehung des Rotors (6) korrespondierendes Signal erzeugt, und wobei der Magnet (7) als ein Ringmagnet ausgebildet ist, und der Magnet (7) in einer Aufnahme (9) am Rotor (6) derart angeordnet ist, dass der Magnet (7) an dessen Außenumfang (10) in der Aufnahme (9), die am ringförmigen Körper (16) mittels eines zum Außenumfang (10) des Magneten (7) korrespondierenden Randes (19) gebildet ist, zentriert ist, **dadurch gekennzeichnet, dass** der ringförmige Körper (16) mittels wenigstens einer Speiche (17) mit der Hülse (15) derart verbunden ist, dass ein Durchbruch (18) zwischen der Hülse (15) und dem ringförmigen Körper (16) für das Fluid (2) gebildet ist.

2. Vorrichtung zur Durchflussmessung nach Anspruch 1, **dadurch gekennzeichnet, dass** ein Rasthaken (12) an der Speiche (17) zur Befestigung des Magneten (7) in der Aufnahme (9) vorgesehen ist, und dass vorzugsweise der Rasthaken (12) am Innendurchmesser (11) des Magneten (7) angeordnet ist.

3. Vorrichtung zur Durchflussmessung nach einem der Ansprüche 1 oder 2, **dadurch gekennzeichnet, dass** der Innendurchmesser (11) des Magneten (7) als ein Polygon ausgebildet ist, und dass vorzugsweise der Rasthaken (12) in eine Ecke des Polygons (11) am Magneten (7) zu dessen Verrastung am Rotor (6) eingreift.

4. Vorrichtung zur Durchflussmessung nach Anspruch 3, **dadurch gekennzeichnet, dass** der polygonförmige Innendurchmesser (11) des Magneten (7) als ein regelmäßiges Achteck ausgebildet ist, dass vorzugsweise vier Speichen (17), insbesondere in etwa kreuzförmig, von der Hülse (15) abgehen, und dass weiter vorzugsweise der Magnet (7) an jeder zweiten Ecke des polygonförmigen Innendurchmessers (11) mittels eines an der Speiche (17) befindlichen Rasthakens (12) befestigt ist.

5. Vorrichtung zur Durchflussmessung nach einem der Ansprüche 1 bis 4, **dadurch gekennzeichnet, dass** ein Flügelrad (20) an der Welle (14) angeordnet ist, derart dass der Rotor (6) von dem das Flügelrad (20) durchströmenden Fluid (2) in Drehbewegung versetzbar ist.

6. Vorrichtung zur Durchflussmessung nach einem der Ansprüche 1 bis 5, **dadurch gekennzeichnet, dass** der Rotor (6) in einer Kammer (13) im Gehäuse (3) drehbar gelagert ist, und dass vorzugsweise der Sensor (8) in und/oder an einer Wandung (21) der Kammer (13) angeordnet ist.

## Claims

1. Device for flow measurement in the manner of a turbine sensor for a fluid (2), having a housing (3), having a first connection (4) on the housing (3) for the supply of the fluid (2), having a second connection (5) on the housing (3) for the discharge of the fluid (2), having a rotor (6) which is located in the housing (3) and can be set in rotary motion by the fluid (2) flowing through it, wherein the rotor (6) is rotatably mounted by means of a shaft (14) and comprises a sleeve (15) arranged on the shaft (14) and an annular body (16) surrounding the sleeve (15) at a concentric distance therefrom, with a magnet (7) arranged on the rotor (6) for interaction with a sensor (8), in particular a Hall sensor, in such a way that, upon rotation of the rotor (6), the sensor (8) generates a signal corresponding to the rotation of the rotor (6), and wherein the magnet (7) is designed as an annular magnet, and the magnet (7) is arranged in a receptacle (9) on the rotor (6) in such a way that the magnet (7) is arranged on the outer circumference (10) thereof in the receptacle (9), which is formed on the annular body (16) by means of an edge (19) corresponding to the outer circumference (10) of the magnet (7), **characterized in that** the annular body (16) is connected to the sleeve (15) by means of at least one spoke (17) in such a way that an opening (18) for the fluid (2) is formed between the sleeve (15) and the annular body (16).

2. Device for flow measurement according to claim 1, **characterised in that** a latching hook (12) is provided on the spoke (17) for fastening the magnet (7) in the receptacle (9), and **in that** preferably the latching hook (12) is arranged on the inner diameter (11) of the magnet (7).

3. Device for flow measurement according to one of claims 1 or 2, **characterised in that** the inner diameter (11) of the magnet (7) is formed as a polygon, and **in that** preferably the latching hook (12) engages in a corner of the polygon (11) on the magnet (7) to latch it to the rotor (6).

4. Device for flow measurement according to claim 3, **characterized in that** the polygonal inner diameter (11) of the magnet (7) is formed as a regular octagon, **in that** preferably four spokes (17), in particular approximately cross-shaped, extend from the sleeve (15), and **in that** furthermore preferably the magnet (7) is fastened at every second corner of the polygonal inner diameter (11) by means of a latching hook (12) located on the spoke (17).

5. Device for flow measurement according to one of the claims 1 to 4, **characterised in that** an impeller (20) is arranged on the shaft (14) in such a way that the rotor (6) can be set in rotary motion by the fluid (2) flowing through the impeller (20).

6. Device for flow measurement according to one of the claims 1 to 5, **characterised in that** the rotor (6) is rotatably mounted in a chamber (13) in the housing (3), and that preferably the sensor (8) is arranged in and/or on a wall (21) of the chamber (13).

## Revendications

1. Dispositif de mesure de débit à la manière d'un capteur de turbine pour un fluide (2), avec un boîtier (3), avec un premier raccord (4) sur le boîtier (3) pour l'amenée du fluide (2), avec un deuxième raccord (5) sur le boîtier (3) pour l'évacuation du fluide (2), avec un rotor (6) se trouvant dans le boîtier (3), qui peut être mis en mouvement de rotation par le fluide (2) qui le traverse, le rotor (6) étant monté à rotation au moyen d'un arbre (14) et comprenant une douille (15) disposée sur l'arbre (14) ainsi qu'un corps annulaire (16) entourant la douille (15) à distance concentrique, avec un aimant (7) disposé sur le rotor (6) pour coopérer avec un capteur (8), en particulier un capteur à effet Hall, de telle sorte que le capteur (8) génère, lors de la rotation du rotor (6), un signal correspondant à la rotation du rotor (6), et dans lequel l'aimant (7) est réalisé sous la forme d'un aimant annulaire, et l'aimant (7) est disposé dans un logement (9) sur le rotor (6) de telle sorte que l'aimant (7) se trouve sur sa périphérie extérieure (10) dans le logement (9), qui est formé sur le corps annulaire (16) au moyen d'un bord (19) correspondant à la périphérie extérieure (10) de l'aimant (7), **caractérisé en ce que** le corps annulaire (16) est relié à la douille (15) au moyen d'au moins un rayon (17) de telle sorte qu'un passage (18) pour le fluide (2) est formé entre la douille (15) et le corps annulaire (16).

2. Dispositif de mesure de débit selon la revendication 1, **caractérisé en ce qu'**un crochet d'arrêt (12) est prévu sur le rayon (17) pour fixer l'aimant (7) dans le logement (9), et **en ce que**, de préférence, le crochet d'arrêt (12) est disposé sur le diamètre intérieur (11) de l'aimant (7).

3. Dispositif de mesure de débit selon l'une des revendications 1 ou 2, **caractérisé en ce que** le diamètre intérieur (11) de l'aimant (7) est réalisé sous la forme d'un polygone, et **en ce que**, de préférence, le crochet d'encliquetage (12) s'engage dans un coin du polygone (11) sur l'aimant (7) pour son encliquetage sur le rotor (6).

4. Dispositif de mesure de débit selon la revendication 3, **caractérisé en ce que** le diamètre intérieur polygonal (11) de l'aimant (7) est réalisé sous la forme d'un octogone régulier, **en ce que** de préférence quatre rayons (17), en particulier à peu près en forme de croix, partent de la douille (15), et **en ce qu'**en outre, de préférence, l'aimant (7) est fixé à chaque deuxième coin du diamètre intérieur polygonal (11) au moyen d'un crochet d'arrêt (12) se trouvant sur le rayon (17).

5. Dispositif de mesure de débit selon l'une des revendications 1 à 4, **caractérisé en ce qu'**une roue à ailettes (20) est disposée sur l'arbre (14) de telle sorte que le rotor (6) peut être mis en mouvement de rotation par le fluide (2) traversant la roue à ailettes (20).

6. Dispositif de mesure de débit selon l'une des revendications 1 à 5, **caractérisé en ce que** le rotor (6) est monté à rotation dans une chambre (13) du boîtier (3) et **en ce que**, de préférence, le capteur (8) est disposé dans et/ou sur une paroi (21) de la chambre (13).
